# EUROPEAN PATENT APPLICATION

(11) **EP 0 799 859 A2**
(43) Date of publication of application: **08.10.1997**
(21) Application number: 97302274.2
(22) Date of filing: 02.04.1997
(51) Int. Cl.: C08L 83/04, C08K 13/02, C08K 5/00, C08K 3/22

(54) **Silicone compositions containing UV degradable fungicides modified by incorporation of zinc oxide**

(30) Priority: 04.04.1996 US 628171
(71) Applicant: DOW CORNING CORPORATION, Midland Michigan 48686-0994 (US)
(72) Inventor: Altes, Michael Gene, Midland, Michigan 48642 (US); O'Neil, Virginia Kay, Midland, Michigan 48640 (US); Tselepis, Arthur James, Midland, Michigan 48640 (US); Wolf, Andreas Thomas Franz, Midland, Michigan 48642 (US)
(74) Representative: Kyle, Diana

(57) **Abstract**

Disclosed herein is a non-acidic room temperature curable silicone composition containing a ultraviolet radiation degradable fungicide wherein discoloration is surprisingly delayed by the addition of zinc oxide.

## Description

This invention relates to room temperature curable silicone compositions containing UV degradable fungicides.

Silicone compositions which cure to produce elastomers at room temperature are widely used as sealants and caulking materials because they have a unique property profile for building construction. These properties include excellent weatherability, resistance to heat, low temperature flexibility, ease of application and rapid cure in place. However, cured silicone compositions over time often become dirty or stain surrounding substrates adjacent to them. This creates an unattractive appearance and cleaning the cured composition and the stain on the adjacent building materials is expensive and the results are often unsatisfactory. Therefore, the need of the construction industry is to develop a silicone composition which does not become dirty or stain adjacent building materials. Many methods have been proposed to eliminate these problems encountered with the use of room temperature curable (RTV) silicone compositions in construction applications.

Approaches to overcoming these problems are the use of surfactants described in U.S. Patents 4,460,740 and 4,695,603, or by JP-As 56-76453 and 56-76452.

An especially successful approach to these problems is U.S. Patent 5,357,025 which describes the use of a siloxaphobic agent that contains at least one perfluorocarbon group per molecule. This group has the general formula of CₓF₍₂ₓ₊₁₎- where x has an average value of at least 6. Using this siloxaphobic agent in combination with a drying oil results in a particularly useful silicone composition. We have unexpectedly found that when RTV silicone compositions containing drying oil were used, the cured silicone composition has a drying oil oxidation product layer which gradually disappeared and reduced its effectiveness for remaining clean. Moreover, such an exposed product layer often experiences an additional problem, the formation of fungus on the sealant surface which is more of a problem than dirt pick-up or staining. One approach to eliminate or retard the growth of fungus on the cured composition surface is to include a fungicide in the formulation. However, the use of a fungicide can also lead to other difficulties. For example, some fungicides cause unsatisfactory property changes. Some fungicides are effective, but degrade (chemically altered) when exposed to ultraviolet (UV) radiation and become ineffective or discolor the cured composition. Once a cured composition is discolored, removal of the discoloration is not practical. It is therefore desirable to overcome these problems with a more practical solution.

An object of this invention is to provide an RTV composition containing a fungicide which avoids the above stated problems. Thus, our invention introduces a non-acidic, RTV curable silicone composition comprising a polymer with moisture condensable silyl end groups, a moisture sensitive crosslinking agent, a filler, a UV radiation degradable fungicide and at least 2 parts by weight of particulate zinc oxide, per 100 parts by weight of the polymer.

This invention is a non-acidic, RTV silicone composition which cures to provide a cured composition where UV exposed surfaces resist discoloration by degradation of a fungicide. This resistance to discoloration is achieved by the presence of particulate zinc oxide in our RTV silicone compositions when the amount is at least 2 parts by weight, per 100 parts by weight of the polymer in the curable composition. Preferably, the zinc oxide is present in amounts from 2 to 15 parts by weight and, more preferably, from 3 to 10 parts by weight, per 100 parts by weight of polymer.

For this invention, the use of the terms "degrade" or "degradation" by UV implies that the fungicide is chemically altered by exposure to UV and discolors as compounds form which have permanently developed chromophoric properties. Yellowing is a frequently encountered discoloration found from the degradation of fungicides by UV radiation.

There are many known fungicides for almost every situation. Some of these fungicides are not desirable in silicone formulations since they have the disadvantage that they are degradable by UV. The degradation of the fungicide causes the cured composition to become a very unattractive color which is problematic as dirt pick-up or substrate staining. By adding to non-acidic RTV silicone compositions containing a UV degradable fungicide at least 2 parts by weight of particulate zinc oxide, per 100 parts by weight of polymer in the composition, we have surprisingly found that the cured product resists formation of color during long exposures to UV. It is a great advantage to have a cured composition which contains a fungicide that does not discolor when exposed to UV. Another distinct advantage of our compositions is their ability to have color matching stability. Where the color of a cured composition is matched to an adjacent substrate, it is important to have that color remain constant. Otherwise, discoloration can cause unsightly changes in the cured composition and destroy the aesthetics of a construction application. Particularly suitable non-acidic, RTV silicone compositions of this invention are those which form a drying oil surface layer that exhibit reduced dirt pick-up. Even more preferred, are our non-acidic, RTV silicone compositions which contain a siloxaphobic agent having at least one CₓF₍₂ₓ₊₁₎- group per molecule. Fungicides suitable for this invention are those which are UV degradable, such as diiodomethyl p-tolyl sulfone.

The RTV silicone composition herein comprises those curable compositions known in the art where the hydrolysis of the hydrolyzable (condensable) group produces a non-acidic leaving compound. For this application, these compositions are termed non-acidic, RTV silicone compositions and comprise a polymer having condensable silyl end groups, a moisture sensitive crosslinking agent, a filler and optionally a curing catalyst for the composition.

Representative polymers include polydiorganosiloxanes having condensable end groups and primarily made up of diorganosiloxane units (R'₂SiO). Small amounts of other siloxane units may be present, such as monoorganosilsesquioxane units (SiO₂ units) which provide branching and triorganosiloxy units which provide termination of the polymer chains. R' is a monovalent hydrocarbon radical or a halogenated monovalent hydrocarbon radical. Examples of monovalent hydrocarbon radicals are alkyl radical such as methyl, ethyl, propyl and n-octyl; alkenyl radicals such as vinyl and allyl; aryl radicals such as phenyl or tolyl; cycloalkyl radicals such as cyclohexyl; and aralkyl radicals such as 2-phenylethyl. Examples of halogenated monovalent hydrocarbon radicals are perfluoroalkylethyl radicals such as 3,3,3-trifluoropropyl and gamma-chloropropyl. The useful condensable end groups of these polymers are hydroxyl groups or hydrolyzable groups such as silicon-bonded alkoxy, ketoximo, amino, amido, aminoxy and alkenoxy. Polydiorganosiloxanes which contain these hydrolyzable groups generally have chain terminating siloxane units of the formula -Si(R')_{y}(X)_{(y-3)} in which R' is as defined above, X is a hydrolyzable group and y is 1, 2 or 3.

The moisture sensitive crosslinking agent contains at least two hydrolyzable groups per molecule, preferably more than two hydrolyzable groups per molecule. The hydrolyzable groups are those where the leaving groups are non-acidic. When the polydiorganosiloxane contains more than two hydrolyzable groups per molecule, this crosslinker has two or more hydrolyzable groups per molecule. These crosslinkers are silanes or partially hydrolyzed products thereof. Examples of silicon-bonded hydrolyzable groups on these crosslinkers are alkoxy, ketoximo, amido, amino, aminoxy and alkenoxy. Specific examples of alkoxy groups are methoxy, ethoxy, n-propoxy, isopropoxy and methoxyethoxy. Suitable ketoximo groups are dimethylketoximo, methylethylketoximo, methylpropylketoximo, methyl-butylketoximo and diethylketoximo. Examples of amino groups are N,N-diethylamino, N-ethylamino, N-propylamino, N,N-methylcyclohexylamino, N-butylamino and N-cyclohexylamino. Akenyloxy groups include propenoxy, isopropenoxy and butenoxy. Some examples of amido groups are N-methylacetamido, N-ethylacetamido, N-butylacetylamido and N-methylbenzamido. Typical aminoxy groups are N,N-dimethylaminoxy, N,N-methylethylaminoxy and N,N-diethylaminoxy.

Examples of crosslinkers are methyltrimethoxysilane, methyltriethoxysilane, vinyltrimethoxysilane, methylphenyldiethoxysilane, 3,3,3-trifluoropropyltrimethoxysilane, methyltri(methylethylketoximo)silane, vinyltri(methylethylketoximo)silane, ethyltri(N,N-diethylamino)silane, dimethyldi(N,N-dibutylamino)silane, vinyltri(N-methyl-N-cyclohexylamino)silane, methyltri(N-methylacetamido)silane, methylvinyldi(N-methylacetamido)silane, methyltri(isoprenoxy)silane, n-propylorthosilicate and ethylpolysilicate.

The crosslinker is used in conventional amounts for making curable silicone compositions that cure at room temperature. The amounts used will vary depending upon the particular crosslinking agent chosen and the desired properties of the cured elastomer. Usually, this crosslinker is present in amounts of from 0.5 to 15 parts by weight per 100 parts by weight of the polymer.

A mixture of polydiorganosiloxane and crosslinker will usually cure at room temperature when exposed to moisture. However, sometimes this time period is too slow for practical applications and it is often desirable to accelerate the cure rate and to reduce the cure time. In these situations, a catalyst is used. These catalysts include metal salts of carboxylic acids such as dibutyl tin dilaurate, dibutyl tin diacetate and tin 2-ethylhexoate; or organotitanates such as tetrabutyl titanate, tetra-n-propyl titanate, diisopropoxydi(ethoxyacetoacetyl) titanate and bis(acetylacetonyl)diisopropyl titanate.

For our RTV silicone compositions to have desirable properties, they also contain a filler. One or more fillers can be used. The filler is a reinforcing filler such as fumed silica, precipitated silica, calcium carbonate, carbon black and siloxane resins comprised of trimethylsiloxy units and SiO_{4/2} units. These reinforcing fillers have surfaces which are treated or untreated, as is known in the art. The filler can also be an extending filler such as calcium carbonate, quartz, diatomaceous earth (also considered a semi-reinforcing filler), iron oxide and titanium dioxide.

One group of preferred RTV silicone compositions for use herein contain a drying oil, which includes natural drying oils, such as tung oil, linseed oil, vernonia oil and oiticica oil; or modified drying oils such as boiled linseed oil and dehydrated castor oil. Tung oil and oiticica oil are preferred because they provide the broadest utility with different kinds of RTV silicone compositions and give the most improved results. An effective amount of drying oil is from 0.5 to 10 parts by weight and the preferred amount of drying oil is from 0.5 to 4 parts by weight, per 100 parts by weight of polymer.

Other ingredients which are conventionally used in formulating RTV silicone compositions can be used in our invention; as long as they do not interfere with the effectiveness of the fungicide or counteract the zinc oxide's ability to resist discoloration of the cured elastomer. These ingredients also include non-slump agents.

The compositions of this invention contain a UV degradable fungicide and zinc oxide as described above. A preferred composition is prepared by combining polymer with crosslinking agent and curing catalyst, if used, and then adding particulate zinc oxide and, finally, drying oil, if used. The drying oil often has a tendency to separate from the remaining ingredients of the silicone composition during storage. Therefore, it is preferred to combine drying oil with the rest of the ingredients shortly before it's exposure to an air atmosphere for curing. When our curable RTV compositions are to be stored and drying oil is a part of the composition, the polymer, crosslinking agent, filler, curing catalyst, fungicide and zinc oxide are mixed and stored in one storage container. The drying oil is conveniently stored in a second storage container. Then, the contents of the two containers are mixed shortly before applying the composition to a substrate, such as applying as a sealant or caulking material, and then exposing it to atmospheric moisture to allow it to vulcanize. Non-acidic RTV silicone compositions that are available commercially are used herein; and the fungicide and particulate zinc oxide are easily blended with them. The fungicide is preferably added to our curable silicone composition after the zinc oxide is mixed into the formulations. In the following silicone compositions, it is understood that these compositions were known, but that the combination of UV degradable fungicide and particulate zinc oxide, as claimed herein, were not known in the prior art.

After application of our composition to a substrate, it is exposed to moisture, such as atmospheric moisture, until a cured elastomer is obtained. Different RTV silicone compositions will cure at different rates; however, one can easily estimate the cure time by checking the surface to see if it is tacky. If upon lightly touching the surface with a finger a tackiness is observed, the surface has not yet reached the cured state. Contrastingly, if no tack is observed, the surface is considered as cured. Usually, the surface reaches the cured state in a few hours to one day to avoid dust and dirt from contacting and adhering to the surface.

Cured silicone elastomeric surfaces are known to have glossy to highly glossy surfaces. If a drying oil is present, the surfaces of the cured composition become dull and have a velvet appearance over a period of time , i.e., a dull surface or finish, also known as a matte finish (mat finish). As the cured surface of the composition becomes dull, the drying oil layer is forming on the air exposed surface and oxidation is taking place.

A preferred RTV silicone composition is obtained herein by mixing a hydroxyl-endblocked polydiorganosiloxane, a filler and a moisture sensitive crosslinking agent having at least three silicon-bonded ketoximo groups per molecule. A suitable ketoximosilicon crosslinker is a mixture of ketoximosilanes and alkoxyketoximosilanes. One such mixture comprises methyltri(methylethyl-ketoximo)silane, methyldi(methylethylketoximo)methoxysilane and methyldimethoxy(methylethylketoximo)silane. Another ketoximosilane mixture comprises a mixture of tetraketoximosilane, ethoxytri(methylethylketoximo)silane, diethoxydi(methylethylketoximo)silane and triethoxy(methylethylketoximo)silane. The latter mixture is known in the art from U.S. Patents 4,657,967 and 4,973,623 which teach ketoximosilane mixture and RTV silicone compositions incorporating such mixtures. Our RTV silicone compositions, made from these ketoximosilane mixtures, preferably contain a catalyst, such as a tin catalyst like a dibutyl tin dilaurate or a titanate catalyst such as diisopropoxy di(ethoxyacetoacetyl) titanate. Also, our RTV silicone compositions preferably contain a treated calcium carbonate as the filler, such as stearic acid treated calcium carbonate.

Another preferred RTV silicone composition useful here is obtained by mixing a hydroxyl endblocked polydiorganosiloxane, an aminoxysilicon crosslinker and a diorganodi(amido)silane, such as methylvinyldi(N-methylacetamido)silane, that also acts as a chain extender. Similar crosslinkers showing the combination of aminoxysilicon crosslinkers and amidosilane chain extenders are known from U.S. Patents 3,817,909 and 3,996,184. The chain extender is typically. used to make low modulus silicone compositions useful in the building construction industry. These compositions are prepared without the use of a catalyst. Calcium carbonate is a useful filler for such compositions.

Another preferred composition herein is a two package composition, in which a first package comprises a hydroxyl endblocked polydiorganosiloxane and filler, and a second package comprises the moisture sensitive crosslinker. The second package may also contain filler and a curing catalyst for the curable RTV silicone composition. If drying oil is used and is not present in the first package, it may be contained in a third package as part of a three-package composition. The particulate zinc oxide of this invention is readily added to any package. One specific RTV silicone composition of this kind, is where the moisture sensitive crosslinker is an alkoxysilicon crosslinker, such as n-propyl orthosilicate or ethylpolysilicate and a tin catalyst is used. These compositions are also stored in separate packages, as above, to prevent premature curing if all the ingredients are mixed for too long a time period before use of the composition.

A composition which has an alkoxysilicon compound as the moisture sensitive crosslinker, may contain all ingredients in just one package. Storage stable compositions are obtained when a titanate catalyst is used as the curing catalyst; and the ratio of alkoxysilicon compound to the endgroups of the polydiorganosiloxane are such that there is at least one alkoxysilicon molecule per polydiorganosiloxane endgroup. Suitable one package RTV silicone compositions comprising alkoxysilicon crosslinkers are described in U.S. Patents 3,161,614, 3,175,993, 3,334,067 and 4,871,827. The drying oils, if used, are preferably stored in a separate container or a storage compartment isolated from the remainder of the one package RTV silicone composition. Then, the drying oil is mixed with said composition shortly before it is used. The natural drying oil is tung oil.

Another preferred RTV silicone composition for use herein is one which contains a siloxaphobic agent and drying oil, such as described in U.S. Patent 5,357,025. The siloxaphobic agent is a material providing a siloxaphobic surface layer to the cured composition. Siloxaphobic agents are a fluorocarbon alcohol, a reaction product of a fluorocarbon alcohol and a hydrolyzable silane or a mixture of fluorocarbon alcohol and the reaction product of fluorocarbon alcohol and hydrolyzable silane. The fluorocarbon alcohol contains at least one perfluorocarbon group of the formula CₓF₍₂ₓ₊₁₎- where x has an average value of at least 6. We found that fluorocarbon alcohols which have x of less than 6 did not prevent migration of siloxane species to the surface of the cured composition. Preferably, the fluorocarbon alcohols are those with fluorocarbon groups in which x has an average value of from 6 to 20. The fluorocarbon alcohols are commercially available and are illustrated by the following formulae 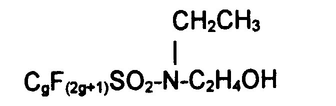 where g has a value of from 6 to 20. Commercial mixtures are sold in which g has an average of 7 and contain species in which g ranges from 6 to 10 inclusive. Such a mixture is FC-10™ which is sold by Minnesota Mining and Manufacturing Company (3M)™, Minneapolis, Minnesota. Other commercial mixtures sold by 3M™ are FC-170C™ which is a fluorocarbon alcohol having the formula 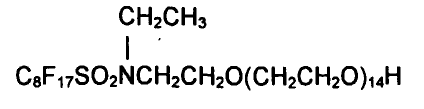 and FC-171™ which is a fluorocarbon alcohol having the formula 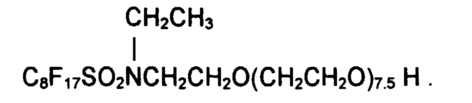 Other commercially available fluorocarbon alcohols include C₈F₁₇CH₂CH₂OH and CₓF₍₂ₓ₊₁₎CH₂CH₂O(CH₂CH₂O)_{f}H where x is from 6 to 16 and f is a positive integer.

The siloxaphobic agent is preferably a reaction product of a fluorocarbon alcohol and a hydrolyzable silane. These agents are siloxaphobic reaction product mixtures which are made by mixing at least 0.01 mole of fluorocarbon alcohol with one mole of hydrolyzable silane under conditions which exclude moisture. Preferably, 0.1 mole of fluorocarbon alcohol is used per mole of hydrolyzable silane. Fluorocarbon alcohols can be used by themselves but some are solid at room temperature and handling or mixing with other ingredients is not fully acceptable. The fluorocarbon alcohols are described above and the hydrolyzable silanes are those also given above as the crosslinking agent. The resulting mixture is heated until some of the fluorocarbon alcohol reacts with the hydrolyzable silane and forms a C-O-Si bond.

The resulting reaction mixture is unreacted hydrolyzable silane, unreacted fluorocarbon alcohol and a reaction product of fluorocarbon alcohol and hydrolyzable silane in which at least one Y group is replaced by the fluorocarbon alcohol, as illustrated by the following equation 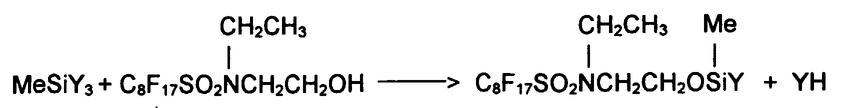 These siloxaphobic reaction product mixtures contain from >0% to 100% reaction product of fluorocarbon alcohol and silane. These mixtures provide the preferred siloxaphobic agents, especially when the reaction product of fluorocarbon alcohol and silane is <50% of the siloxaphobic reaction mixture. A preferred siloxaphobic reaction mixture is one in which the fluorocarbon alcohol has the formula 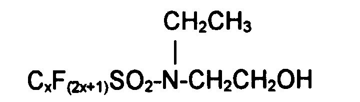 wherein x has an average value of at least 6, the hydrolyzable silane has the formula 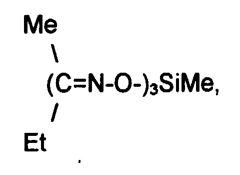 and the reaction product of the fluorocarbon alcohol and the hydrolyzable silane comprises a compound of the formula 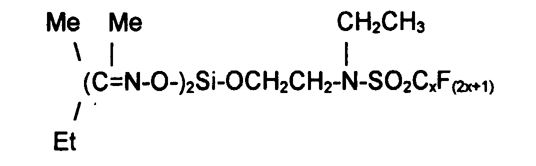 wherein x has an average value of at least 6. This siloxaphobic reaction mixture is preferred because the siloxaphobic surface layer is rapidly formed during cure of the elastomeric polyorganosiloxane composition and because the surface resists the accumulation of dirt and stain when the cured elastomer is vulnerable to dirt and dust.

The siloxaphobic reaction mixture through some unknown mechanism more readily forms a siloxaphobic surface layer than the use of unreacted fluorocarbon alcohol, i.e., the fluorocarbon alcohol is merely mixed with the other composition ingredients. The siloxaphobic surface layer is regenerated over the useful life of the cured silicone composition. The siloxaphobic reaction mixture acts as a reservoir and continually renews the siloxaphobic surface layer as it becomes depleted with age. The siloxaphobic surface layer also provides a cured composition which retards color formation on the surface and adjacent surrounding areas which may be exposed to weather. The siloxaphobic surface layer also keeps the properties of the cured elastomer from changing with age because siloxane ingredients are not readily lost by migration or evaporation, but are properly maintained within the cured silicone matrix. The siloxaphobic reaction mixture does not adversely effect the curing properties of the sealant or caulking material; and the adhesion to various substrates, particularly those used in building construction, are superior. The siloxaphobic reaction mixture is used in small amounts; yet provides useful properties over long periods of time. The amounts are such that the fluorocarbon group is present in the composition in amounts of from 0.1 to 7 inclusive weight percent, based on the weight of the composition and preferably from 1 to 3 weight percent.

The following examples are presented for illustrative purposes and are demonstrative of the present invention which is properly delineated in the claims. In the examples, part or parts refers to parts by weight and all viscosities are measured at 25°C.

### EXAMPLE

An RTV silicone composition was prepared by mixing under conditions which protected against ingress of moisture. In a mixer, 100 parts of a silanol endblocked polydimethylsiloxane having a viscosity of 50 Pa·s and 1 part of a ketoximosilane mixture of 72 weight percent of methyltri(methylethylketoximo)silane, 21 weight percent of methyldi(methylethylketoximo)methoxysilane, 0.5 weight percent of methyldimethoxy(methylethylketoximo)silane and 6.5 weight percent of impurities, were mixed for one minute under 74.29 kPa of vacuum and allowed to stand for 30 minutes. Then, 1 part of methylvinyldi(N-methylacetamido)silane was added and stirred for one minute under 74.29 kPa of vacuum. To the resulting mixture, 12 parts of a mixture of 2.5 parts of the above ketoximosilane mixture, 2.4 parts of a fluorocarbon alcohol FC-10™, 0.4 part of beta-aminoethyl-gamma-amino-propyltrimethoxysilane, 0.4 part of gamma-glycidoxypropyltimethoxysilane, 0.07 part of dibutyl tin dilaurate, 4 parts of methyltrimethoxysilane, 1 part of diisopropoxy di(ethoxyacetoacetyl) titanate, 1.1 parts of the reaction product of FC-10™ fluorocarbon alcohol and the ketoximosilane mixture having the formula 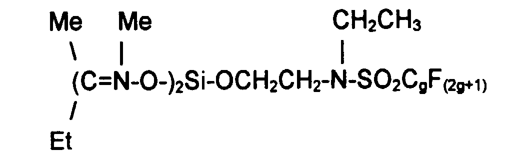 wherein g has an average value of 7 and 0.6 part impurities were added and stirred for one minute under 74.29 kPa vacuum. FC-10™ is sold by Minnesota Mining and Manufacturing Company (3M), Minneapolis, Minnesota and is a mixture of species from the formula 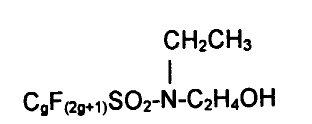 in which g has a value of from 6 to 10.

Next, 60 parts of stearic acid-treated precipitated calcium carbonate filler, having an average particle diameter of 0.04 micrometer and 1 part of a polymer of 2,5-furandione with 1,3-butadiene were added and stirred for 5 minutes under 74.29 kPa of vacuum. The resulting mixture was identified as a base composition and six such base mixtures were prepared. One of the base compositions was considered a control formulation and 1.75 part of tung oil was added and stirred under 74.29 kPa of vacuum. To five other base compositions, 2, 4, 6, 8 and 10 parts of particulate zinc oxide, having an average particle diameter of 0.12 micrometer, were added to each respectively, and each was then stirred for 5 minutes under 74.29 kPa of vacuum. To each composition, 0.216 part of diiodomethyl p-tolyl sulfone (Amical™ 50 purchased from Angus Chemical Company, Northbrook, Illinois, USA) was added and then the mixture was stirred for 5 minutes under 74.29 kPa vacuum. To each composition prepared, 1.75 parts of tung oil were added and stirred one minute under 74.29 kPa of vacuum.

Each resulting formulation was then packaged in Semco™ tubes, made by Courtlands Aerospace, Califomia, and centrifuged to eliminate any entrained air. Samples of each of the 6 formulations were cast as 5.08 by 5.08 cm slabs of 0.254 cm thickness on aluminum panels and allowed to cure for 5 days at 21°C and 50% relative humidity. After cure, each of the test panels had developed a matte finish which was indicative of a tung oil modified silicone sealant surface. Test panels containing the 6 formulations were placed in a QUV™ accelerated weathering chamber, using a QUV™ A 340 light source, with a cycle of 8 hours ultraviolet (UV) radiation exposure at 70°C., followed by 4 hours of condensing humidity at 50°C. These evaluations were done in accordance with ASTM D 4587-86. The QUV™ chamber was from Q-Panel Corp., Cleveland, Ohio. After 979 hours in this chamber, the control and sample (which contained 2 parts of zinc oxide) no longer exhibited the matte finish that indicated the tung oil surface modification. Those samples which contained 4, 6, 8 and 10 parts of zinc oxide still had a matte finish after 979 hours in the same chamber. The diiodomethyl p-tolyl sulfone degraded when exposed to UV and yellowed (formation of chromophore). For this reason, the yellowness of the test panels were measured at different time intervals in the chamber.

The yellowness of each test panel was determined initially using Reflectance Spectrophotometry (Macbeth™ spectrophotometer) according to ASTM D 1925 to provide a yellowness index. The yellowness was also determined after 323 hours and after 979 hours in the above chamber. The yellowness indexes (Yl) are shown in Table I.

**TABLE I**

| PARTS, ZINC OXIDE | Yl INITIALLY | Yl AFTER 323 HOURS | Yl AFTER 979 HOURS |
|---|---|---|---|
| 0 | 113.76 | 127.18 | 119.10 |
| 2 | 113,77 | 120.43 | 115.36 |
| 4 | 112.69 | 120.22 | 115.38 |
| 6 | 112.31 | 118.68 | 115.09 |
| 8 | 112.42 | 115.60 | 113.35 |
| 10 | 114.61 | 111.65 | 110.93 |

Six RTV silicone compositions were prepared as described above except that no diiodomethyl p-tolyl sulfone was added. Moreover, the combined amount of calcium carbonate filler and zinc was kept constant at 60 parts per 100 parts of polydimethylsiloxane, e.g., the control composition = 60 parts of calcium carbonate; the composition containing 2 parts zinc oxide had 58 parts calcium carbonate; the composition containing 4 parts zinc oxide had 56 parts calcium carbonate; and the like. The combined parts of zinc oxide and calcium carbonate were kept constant to avoid any potential variations of physical properties due to change of pigment to binder ratio. Each resulting formulation was then packaged in Semco™ tubes and centrifuged to eliminate any entrained air. Samples of each of the six formulations were cast as 5.08 by 5.08 cm slabs of 0.254 cm thickness on polyethylene sheets and allowed to cure for 14 days at 21°C and 50% relative humidity. After 14 days cure, each of the test panels had developed a matte finish which was indicative of a tung oil modified sealant surface. Test panels containing the six formulations were placed in the QUV™ chamber described above. After 650 hours, none of the test panels had yellowed compared to initial observations. These results illustrated that the yellow color was due to the degradation of the fungicide and that the presence of zinc oxide retarded the development of color. After 650 hours in the chamber, inspection of the surface of the control formulation showed that the tung oil surface was deteriorating as the matte finish was disappearing whereas the surfaces of those formulations containing zinc oxide showed no signs of loss of tung oil because the matte finish appeared equivalent to the matte finish initially observed. These results show that zinc oxide in an RTV silicone formulation will unexpectedly increase the longevity of the drying oil at its surface.

Each of the six formulations were also tested for durometer using the Shore A scale by ASTM D 2240. Testing was also performed according to ASTM D 412, for tensile strength at break (reported in kPa), the elongation at break reported in percent and 100% modulus also reported in kPa. The results of these tests are reported in the Table II.

**TABLE II**

| AMOUNT OF ZINC OXIDE IN FORMULATION, in parts | | | | | | |
|---|---|---|---|---|---|---|
| PROPERTY | 0 | 2 | 4 | 6 | 8 | 10 |
| DUROMETER | 19 | 20 | 18 | 20 | 19 | 19 |
| TENSILE AT BREAK, kPa | 1880 | 1820 | 1660 | 2030 | 1770 | 2010 |
| ELONGATION, % | 1004 | 1087 | 1045 | 1192 | 1069 | 1169 |
| 100% MODULUS, | 260 | 230 | 230 | 230 | 230 | 230 |

The cured physical properties were not functionally effected by the presence of the particulate zinc oxide as shown by comparing the physical properties of the control to those of our formulations containing zinc oxide.

## Claims

1. A non-acidic room temperature curable silicone composition comprises a polymer with moisture condensable silyl end groups, a moisture sensitive crosslinking agent, a filler, an ultraviolet radiation degradable fungicide and at least 2 parts by weight of particulate zinc oxide, per 100 parts by weight of the polymer.

2. The composition according to claim 1 in which the fungicide is diiodomethyl p-tolyl sulfone.

3. The composition according to claims 1 or 2 in which the crosslinking agent is a ketoximosilicon crosslinker having at least three silicon-bonded ketoximo groups per molecule.

4. The composition according to any of claims 1 to 3, in which the composition further contains a curing catalyst.

5. The composition according to claim 4 in which the curing catalyst is a titanate catalyst or a tin catalyst.

6. The composition according to claim 5 in which the curing catalyst is a combination of titanate catalyst and tin catalyst.

7. The composition according to any of claims 1 to 6, in which the composition also contains a drying oil.

8. The composition according to claim 7 in which the drying oil is tung oil.

9. The composition according to any of claims 1 to 8, in which the composition also contains a fluorinated compound as a siloxaphobic agent.

10. The composition according to claim 9 in which the fluorinated compound is a fluorinated alcohol containing more than 13 fluorine atoms per molecule.

11. The composition according to claim 7 which is provided in two-part form wherein the first part comprises the polymer, crosslinking agent, filler, fungicide and zinc oxide and the second part comprises the drying oil.

12. A method of reducing tendency of a ultraviolet radiation degradable fungicide to cause discoloration of a non-acidic room temperature curable silicone composition comprising
(A) preparing the composition of any of claims 1 to 11;
(B) exposing (A) to atmospheric moisture producing a cured composition; and
(C) exposing the cured composition to ultraviolet radiation.
